# EUROPEAN PATENT APPLICATION

(11) **EP 3 457 238 A1**
(43) Date of publication of application: **20.03.2019**
(21) Application number: 18194141.0
(22) Date of filing: 13.09.2018
(51) Int. Cl.: G05B 19/4065, G05B 19/4155, G05B 23/02, G05B 19/418

(54) **MACHINING DEVICES**

(30) Priority: 14.09.2017 JP 2017177168
(71) Applicant: DGSHAPE Corporation, Hamamatsu-shi, Shizuoka 431-2103 (JP)
(72) Inventor: KANJA, Tetsuya, Hamamatsu-shi,, Shizuoka 4312103 (JP); SAITO, Koji, Hamamatsu-shi,, Shizuoka 4312103 (JP); HANAJIMA, Masaki, Hamamatsu-shi,, Shizuoka 4312103 (JP); HAYASAKA, Keiichi, Hamamatsu-shi,, Shizuoka 4312103 (JP)
(74) Representative: Grünecker Patent- und Rechtsanwälte PartG mbB

(57) **Abstract**

To provide machining devices with which milling can be continued even after a machining tool is judged as being unusable during milling.

A machining device including: a milling mechanism for carrying a machining tool and being for milling a workpiece; a detection mechanism that detects a length of the machining tool; a storage mechanism that holds a plurality of machining tools; a workpiece changing mechanism being capable of changing the workpieces to be milled by the milling mechanism; a memory unit that memorizes a group of commands, the group of commands including a machining command for forming the modeled object to the workpiece, a tool usability judging command for judging usability of the machining tool, and a workpiece change command for changing the workpieces; and a control unit that skips over, when it judges, as a result of the execution of the tool usability judging command, that the machining tool in use cannot be used anymore because the length of the machining tool in use is equal to or smaller than a predetermined value, one or more commands which have been scheduled to be executed before the workpiece change command to be executed for the first time after the tool usability judging command.

## Description

### Technical field

The present invention relates to machining devices.

### Background art

Machining devices for forming modeled objects having a predetermined machined surface by milling workpieces using a machining tool or tools have been known.

For example, a document provided by Roland DG online at http://www.rolanddg.co.jp/product/pdf/DWX-52DC.pdf, [retrieved on August 15, 2017] discloses machining devices with a disk changer capable of automatically changing a plurality of workpieces.

The machining devices mentioned above can continuously machine a plurality of workpieces; therefore, the devices can be left unattended or machining operations can be performed overnight, which significantly improves the efficiency of machining processes for modeled objects and thus improves productivity.

Conventional machining devices including those mentioned above, however, halt the machining operation if a machining tool becomes unusable because of being broken or chipped in milling. In such cases, milling of workpieces to be machined thereafter cannot be continued unless an operator manually replaces the machining tools.

Therefore, the present invention was made with respect to the aforementioned circumstances, and an object of the present invention is to provide machining devices with which milling can be continued even after a machining tool is judged as being unusable during milling.

### Summary of the invention

A main invention to achieve the aforementioned object is a machining device including: a milling mechanism for carrying a machining tool and being for milling a workpiece; a detection mechanism that detects a length of the machining tool carried by the milling mechanism; a storage mechanism that holds a plurality of machining tools used by the milling mechanism; a workpiece changing mechanism holding a plurality of workpieces and being capable of changing the workpieces to be milled by the milling mechanism; a memory unit that memorizes a group of commands executed to form a predetermined modeled object to each of the plurality of workpieces, the group of commands including a machining command for forming the modeled object to the workpiece, a tool usability judging command for judging usability of the machining tool, and a workpiece change command for changing the workpieces; and a control unit that controls the milling mechanism, the detection mechanism, the storage mechanism, and the workpiece changing mechanism by executing the commands included in the group of commands, wherein: when the control unit judges, as a result of the execution of the tool usability judging command, that the machining tool in use cannot be used anymore because the length of the machining tool in use is equal to or smaller than a predetermined value, the control unit skips over one or more commands which have been scheduled to be executed before the workpiece change command to be executed for the first time after the tool usability judging command. Other features of the present invention will be apparent from the descriptions of the specification and drawings that follow.

According to the present invention, it is possible to provide machining devices with which milling can be continued even after a machining tool is judged as being unusable during milling.

### Brief description of the drawings

Fig. 1 is a diagram illustrating a structure of a machining system according to a first embodiment;
Fig. 2 is a diagram illustrating a structure of a detection mechanism according to the first embodiment;
Fig. 3 is an example of machining achieved by a machining device according to the first embodiment;
Fig. 4 is a flowchart illustrating an operation of the machining device according to the first embodiment;
Fig. 5 is an example of machining achieved by a machining device according to a second embodiment; and
Fig. 6 is a flowchart illustrating an operation of the machining device according to the second embodiment.

### Detailed description of the invention

### === First embodiment ===

Referring to the drawings, embodiments of the present invention are described. The embodiments described below include various limitations that are technically preferable for the purpose of implementing the present invention. Therefore, the scope of the present invention is not limited to the following embodiments and illustrated examples.

### [Structure of a machining system]

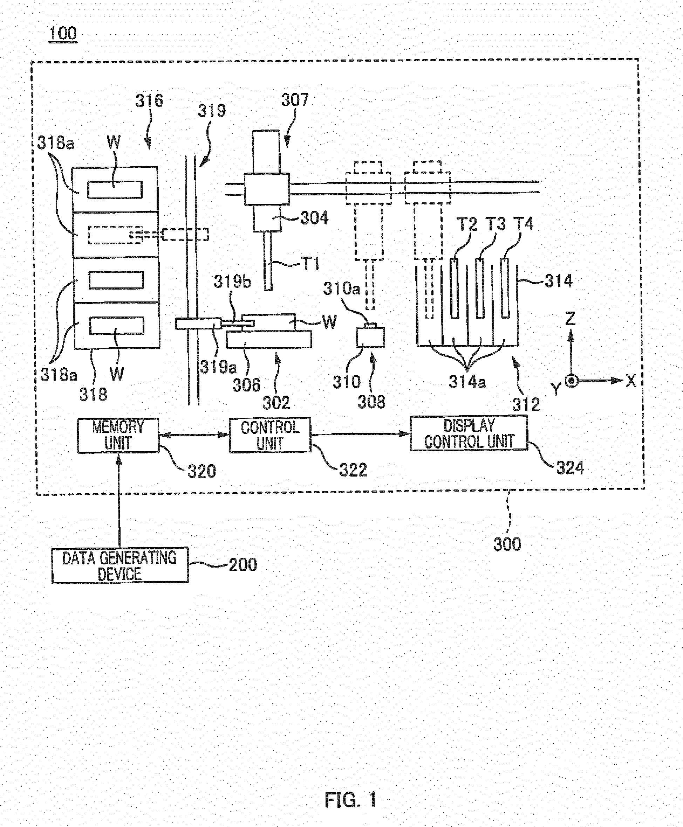

Fig. 1 is a diagram used for describing a structure of a machining system 100 according to this embodiment. The machining system 100 according to this embodiment comprises a data generating device 200 and a machining device 300. In Fig. 1, the horizontal and vertical directions are defined as the X- and Z-directions, respectively, and the direction perpendicular to the plane of the paper is defined as the Y-direction.

The data generating device 200 is for generating data (hereinafter, referred to as "machining data") representing the shape of a machined surface of a modeled object formed to a workpiece W. The data generating device 200 supplies the generated machining data to the machining device 300. The machining data is generated based on 3D data for the modeled object and 3D data for the workpiece W. For example, when a dental prosthesis is formed by machining, machining data is generated using 3D data obtained by scanning the mouth with a CCD camera or X-ray CT. The 3D data for the modeled object is, for example, STL data, solid data used for 3D CAD systems, or data in 3MF or AMF format used for 3D printers. The generated data may have any format as long as the data can be used for the machining device 300.

The machining device 300 is a device that receives the machining data from the data generating device 200 and forms the modeled object to the workpiece W based on that data. As shown in Fig. 1, the machining device 300 has a milling mechanism 302, a detection mechanism 308, a storage mechanism 312, a workpiece changing mechanism 316, a memory unit 320, a control unit 322, a display control unit 324.

The milling mechanism 302 carries machining tools and mills the workpiece W using the machining tool(s). The milling mechanism 302 has a tool holder 304, a workpiece holder 306, and a driving mechanism 307. The tool holder 304 holds one of machining tools used in milling. Machining tools are rod-shaped tools for milling the workpiece W. In Fig. 1, the tool holder 304 is holding a machining tool T1. The workpiece holder 306 holds the workpiece W milled during a milling operation. The driving mechanism 307 moves, using a driving motor, the machining tool relative to the workpiece W (the workpiece holder 306). The driving mechanism 307 has, for example, five driving axes (the X-, Y-, and Z-axes, and axes which rotate about the X- and Y-axes, respectively).

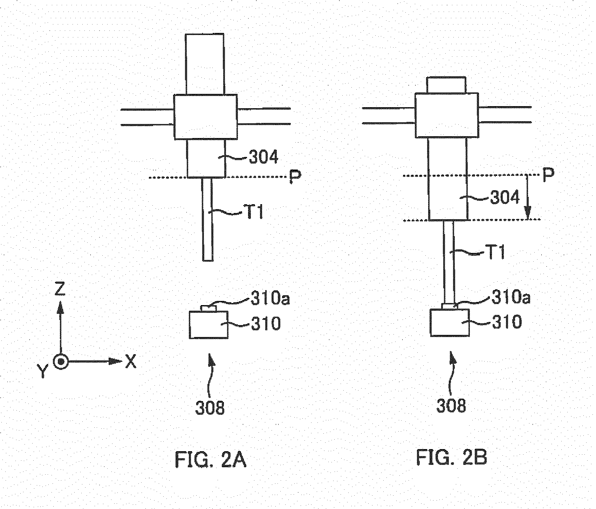

The detection mechanism 308 determines the length of the machining tool T1 held by the tool holder 304. How the detection mechanism 308 in this embodiment determines the length of the machining tool T1 is described with reference to Fig. 2. In Fig. 2, the horizontal and vertical directions are defined as the X- and Z-directions, respectively, and the direction perpendicular to the plane of the paper is defined as the Y-direction. The detection mechanism 308 has a tool sensor 310. A switch 310a is disposed on the tool sensor 310. First, according to an instruction from the control unit 322, the driving mechanism 307 of the milling mechanism 302 moves the tool holder 304 to a position P located above (the Z-direction) the switch 310a at a predetermined height from the switch 310a (Fig. 2(a)). The position P is used, when the tool holder 304 is holding the machining tool T1, as the starting point from which the length of the machining tool T1 is to be measured. Here, the predetermined position P is memorized in the memory unit 320 beforehand. The driving mechanism 307 moves the tool holder 304 toward the position P and then moves the tool holder 304 toward the tool sensor 310 at a predetermined speed. The control unit 322 directs the tool holder 304 to begin moving toward the tool sensor 310 and sends a first detection signal to the detection mechanism 308. The aforementioned predetermined speed is one of pieces of information used for determining the length of the machining tool T1 and is memorized in the memory unit 320 beforehand. As the tool holder 304 moves down at the predetermined speed mentioned above, the machining tool T1 held by the tool holder 304 is brought into contact with the switch 310a of the tool sensor 310 (Fig. 2(b)). The tool sensor 310 senses the contact of the machining tool T1 with the switch 310a of the tool sensor 310 and sends a second detection signal to the detection mechanism 308. The detection mechanism 308 calculates the time taken by the tool holder 304 to reach the switch 310a from the position P using the time taken from the moment the detection mechanism 308 receives the first detection signal to the moment it receives the second detection signal. The detection mechanism 308 can thus determine the length of the machining tool T1 held by the tool holder 304 based on the aforementioned predetermined speed and the time taken to cover this length. Specifically, the distance covered by the tool holder 304 can be calculated by multiplying the predetermined speed by the time taken by the tool holder 304 to travel. Then, the length of the machining tool T1 can be determined by subtracting the distance covered by the tool holder 304 from the distance between the switch 310a and the position P. The method of determining the length of the machining tool T1 using the detection mechanism 308 of this embodiment is merely an example and the method is not limited thereto.

The storage mechanism 312 holds a plurality of machining tools to be held by the tool holder 304. The storage mechanism 312 has a magazine 314. The magazine 314 has a plurality of storage compartments 314a. Each storage compartment 314a can receive and store one machining tool. Depending on purposes of machining, different kinds of machining tools are stored. Further, two or more machining tools are stored for each single kind of machining tool. In the example shown in Fig. 1, other machining tools T2 to T4 are stored in the magazine 314. It is assumed that the machining tools T1 and T3 are of the same kind. Each of the storage compartments 314a is assigned with a unique identifier (i.e., a storage compartment ID). Further, each of the machining tools stored in the respective storage compartments 314a is assigned with a unique identifier (i.e., a tool ID). The storage compartment IDs and the tool IDs are correlated to each other and memorized in the memory unit 320. The control unit 322 can identify the machining tools stored in the storage compartments 314a by reading the storage compartment IDs and the tool IDs from the memory unit 320.

By controlling the tool holder 304 and the driving mechanism 307 of the milling mechanism by the control unit 322, the machining tool T1 comprised in the milling mechanism 302 can be changed for one of the machining tools T2 to T4 stored in the magazine 314.

The workpiece changing mechanism 316 carries a plurality of workpieces W. The workpiece changing mechanism 316 can change the workpieces W to be milled by the milling mechanism 302. The workpiece changing mechanism 316 has a storage rack 318 and a workpiece transfer mechanism 319. A plurality of workpieces W can be stored in the storage rack 318. The storage rack 318 has a plurality of holding shelves 318a. Each of the holding shelves 318a can store one workpiece W. Each of the holding shelves 318a is assigned with a unique identifier (i.e., a holding shelf ID). Further, each of the workpieces W stored in the respective holding shelves 318a is assigned with a unique identifier (i.e., a workpiece ID). The holding shelf IDs and the workpiece IDs are correlated to each other and are memorized in the memory unit 320. The control unit 322 can identify the workpieces W stored in the holding shelves 318a by reading the holding shelf IDs and the workpiece IDs from the memory unit 320.

The workpiece transfer mechanism 319 can, in response to an instruction from the control unit 322, change the workpiece W held by the workpiece holder 306 of the milling mechanism 302 for one of the workpieces W stored in the storage rack 318. The workpiece transfer mechanism 319 has, for example, an arm 319a and a clamp unit 319b attached to the arm 319a. The workpiece transfer mechanism 319 can transfer the workpiece W between the workpiece holder 306 and the storage rack 318 with the workpiece W being held by the clamp unit 319b. Further, the workpiece transfer mechanism 319 can attach and remove the workpiece W to and from the workpiece holder 306 as well as put the workpiece W into and out of the storage rack 318 with the workpiece W being held by the clamp unit 319b.

The memory unit 320 memorizes a group of commands executed to form a predetermined modeled object to each of the plurality of workpieces W. The group of commands includes machining commands, a tool usability judging command, tool change commands, and workpiece change commands. Details of these commands are described later. The memory unit 320 stores the holding shelf IDs and the workpiece IDs, with the holding shelf IDs and the workpiece IDs being correlated to each other.

The machining commands are for controlling the milling mechanism 302 to form a modeled object or objects to the workpiece W. Each machining command is correlated to a modeled object ID for use in identifying the modeled object to be formed, a machining data ID for identifying the machining data for the modeled object and a machining path ID for identifying a machining path to form it.

The tool usability judging command is for controlling the detection mechanism 308 to judge whether the machining tool T is available or not.

The tool change commands are for controlling the milling mechanism 302 to change a machining tool T for another machining tool T. Each tool change command is correlated to a tool ID of the machining tool T held by the tool holder 304 of the milling mechanism 302. When the control unit 322 executes the machining command, the workpiece W held by the workpiece holder 306 of the milling mechanism 302 is subjected to milling along the machining path corresponding to the machining path ID, using the machining tool(s) comprised in the milling mechanism 302.

The workpiece change commands are for controlling the workpiece changing mechanism 316 to change the workpieces W. Each workpiece change command is correlated to the workpiece ID of the workpiece W that should be held by the workpiece holder 306 of the milling mechanism 302.

The control unit 322 reads the group of commands memorized in the memory unit 320. The control unit 322 executes, in order, two or more commands included in the group of commands that have been read. The control unit 322 controls the milling mechanism 302, the detection mechanism 308, and the workpiece changing mechanism 316 by executing these commands.

Specifically, when the control unit 322 executes the tool usability judging command, it controls the detection mechanism 308 to determine the length of the machining tool comprised in the milling mechanism 302. The control unit 322 judges whether the machining tool is usable or not according to the length of the machining tool determined by the detection mechanism 308. The control unit 322 judges that the machining tool T1 is not usable when the length of the machining tool T1 is equal to or smaller than a predetermined value. The predetermined value represents the length equal to or longer than the minimum length required for correctly milling the workpiece W by the milling mechanism 302 and can be set by a user beforehand. The predetermined value is memorized in the memory unit 320 beforehand. Examples of cases where the machining tool T1 is judged as being unusable include cases where the machining tool T1 is broken or chipped during milling or cases where the machining tool T1 is worn due to continuous milling operations.

When the control unit 322 executes a tool change command, the control unit 322 causes the machining tool held by the tool holder 304 to move together with the tool holder 304, inserts that machining tool into a predetermined storage compartment 314a of the magazine 314 and releases the holding of the machining tool, by controlling the tool holder 304 and the driving mechanism 307 of the milling mechanism 302. Then, the control unit 322 moves the tool holder 304 to the storage compartment 314a in which another machining tool identified according to the tool ID correlated to the tool change command and directs the tool holder 304 to hold that another machining tool. In this way, the control unit 322 changes the machining tool held by the tool holder 304.

When the control unit 322 executes a workpiece change command, the control unit 322 directs the workpiece transfer mechanism 319 to transfer the workpiece W held by the workpiece holder 306 to a predetermined holding shelf 318a of the storage rack 318 and stores the workpiece W therein, by controlling the workpiece changing mechanism 316. Then, the control unit 322 picks up the workpiece W identified according to the workpiece ID correlated to the workpiece change command from a predetermined holding shelf 318a and transfers it to the workpiece holder 306. In this way, the control unit 322 changes the workpiece W held by the workpiece holder 306.

Although details are not described here, in the present embodiment, when the control unit 322 judges, as a result of the execution of the tool usability judging command, that the machining tool T1 in use cannot be used anymore, the control unit 322 skips over one or more commands which have been scheduled to be executed before a workpiece change command is executed for the first time after the tool usability judging command.

The display control unit 324 orders display of log information related to the control unit 322. The log information includes at least one of information of the command(s) skipped by the control unit 322, information representing the machining tool T judged as being unusable, and information related to the workpiece W under being milled when the tool is judged as being unusable. The information of the command includes, for example, the type of the command and IDs (e.g., the tool ID, the workpiece ID, the modeled object ID, the machining data ID, and the machining path ID) correlated to the command. The information representing the machining tool T includes the tool ID for the machining tool T. The information related to the workpiece W includes, for example, the workpiece ID for the workpiece W.

For example, when a machining command is skipped and the workpiece ID correlated to that machining command is displayed in addition to the indication of the skipping, it is possible to determine positively, without any visual observation, that the subject workpiece has not been processed yet.

The log information may be displayed in synchronism with the execution or skip of a command. According to this, it is possible to decide, if necessary, whether machining is stopped or continued even during machining.

The display control unit 324 may display the log information on a display unit (not shown) provided in the machining device 300 or on, for example, an external display device connected to the machining device 300.

### [Exemplified machining operation]

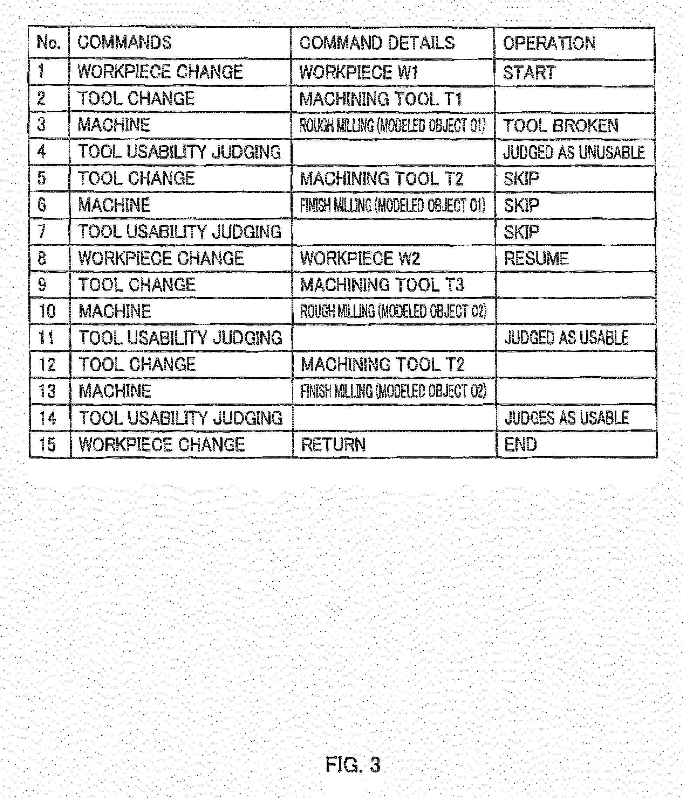

An exemplified machining operation achieved by the machining device 300 according to this embodiment is described. Fig. 3 shows an example of the group of commands by the machining device 300 according to this embodiment. A plurality of commands suitable for the machining data are set in the order to be executed.

In this example, a workpiece W1 and a workpiece W2 are stored in storage racks 318. Further, in this example, a modeled object O1 is formed to the workpiece W1 while a modeled object 02 is formed to the workpiece W2. The modeled objects O1 and O2 are formed in two-stage milling consisting of rough milling and finish milling.

Further, in this example, machining tools T1 to T4 are stored in the storage compartments 314a of the magazine 314. The machining tools T1 and T3 are of the same kind and are used for rough milling. The machining tools T2 and T4 are of the same kind and are used for finish milling.

In Fig. 3, Nos. 1 to 7 correspond to commands for forming the modeled object O1 to the workpiece W1. Nos. 8 to 15 correspond to commands for forming the modeled object O2 to the workpiece W2.

No. 1 corresponds to a command for transferring the workpiece W1 and loading it onto the workpiece holder 306. Nos. 2 to 4 correspond to commands for rough milling of the modeled object O1. Nos. 5 to 7 correspond to commands for finish milling of the modeled object O1. No. 8 corresponds to a command for returning the workpiece W1 held by the workpiece holder 306 to the storage rack 318, transferring the workpiece W2 and loading it onto the workpiece holder 306. Nos. 9 to 11 correspond to commands for rough milling of the modeled object 02. Nos. 12 to 14 correspond to commands for finish milling of the modeled object 02. No. 15 corresponds to a command for returning the workpiece W2 held by the workpiece holder 306 to the storage rack 318. As can be seen from Fig. 3, each machining command is followed by the tool usability judging command. This means that, immediately after a certain machining tool is used, it can be judged whether the machining tool is broken.

First, the workpiece change command indicated at No. 1 is executed. At this point of time, no workpiece is held by the workpiece holder 306 of the milling mechanism 302. In such a case, the control unit 322 controls the workpiece changing mechanism 316 to pick up a predetermined workpiece, i.e., the workpiece W1, from the storage rack 318, transfers the workpiece W1, and loads it onto the workpiece holder 306.

Next, the tool change command indicated at No. 2 is executed. At this point of time, no machining tool is held by the tool holder 304 of the milling mechanism 302. In such a case, the control unit 322 controls the tool holder 304 and the driving mechanism 307 of the milling mechanism 302 to picks up a predetermined machining tool, i.e., the machining tool T1, from the magazine 314 and directs the tool holder 304 to hold it.

Next, the machining command indicated at No. 3 is executed. In this example, it is assumed that the machining tool T1 is broken during the execution of the machining command.

Next, the tool usability judging command indicated at No. 4 is executed. Since the machining tool T1 is broken during the execution of the immediately preceding machining command, the control unit 322 judges, as a result of the execution of the tool usability judging command, that the machining tool T1 is not usable according to the result obtained by the detection mechanism 308 detecting the length of the machining tool T1.

In this embodiment, when the control unit 322 judges, as a result of the execution of the tool usability judging command, that the machining tool in use cannot be used anymore because the length of the machining tool in use is equal to or smaller than a predetermined value, the control unit 322 controls to skip over one or more commands which have been scheduled to be executed before the workpiece change command to be executed for the first time after the tool usability judging command. Specifically, as shown in Fig. 3, the control unit 322 skips over the commands indicated at Nos. 5 to 7. In other words, the control unit 322 skips over the commands before the workpiece change command indicated at No. 8 to be executed for the first time after the tool usability judging command indicated at No. 4. Since the commands indicated at Nos. 5 to 7 are skipped, the workpiece W1 has not been processed yet.

Next, the workpiece change command indicated at No. 8 is executed. At this point of time, the workpiece W1 that has not been processed yet is held by the workpiece holder 306 of the milling mechanism 302. The control unit 322 controls the workpiece changing mechanism 316 to return the workpiece W1 from the workpiece holder 306 to a predetermined holding shelf 318a of the storage rack 318 and then pick up the workpiece W2 from the storage rack 318, transfer the workpiece W2, and load it onto the workpiece holder 306.

Next, the tool change command indicated at No. 9 is executed. At this point of time, the control unit 322 controls the tool holder 304 and the driving mechanism 307 of the milling mechanism 302 to direct the tool holder 304 to hold the machining tool for rough milling indicated at No. 10. It is, however, impossible to correctly machine the workpiece W2 if the machining tool T1 is continuously used because the machining tool T1 was broken at No. 3. Accordingly, at No. 9, the control unit 322 directs, as a result of the judgement at No. 4 that the machining tool T1 cannot be used anymore, the tool holder 304 to hold, in place of the machining tool T1, another machining tool, i.e., the machining tool T3, that is of the same kind as the machining tool T1.

Next, the control unit 322 executes, in order, from the machining command indicated at No. 10 to the tool usability judging command indicated at No. 14, thereby forming the modeled object 02 to the workpiece W2.

Finally, the workpiece change command indicated at No. 15 is executed. The control unit 322 controls the workpiece changing mechanism 316 to return the workpiece W2 from the workpiece holder 306 to a predetermined holding shelf 318a of the storage rack 318, and the machining is completed.

In machining in conventional machining devices, if the machining tool is broken, the workpiece being machined at that time will be discarded. Further, if the machining tool is broken, the machining operation is stopped and no subsequent machining can be continued. To resume machining, it is necessary for a user to manually replace the broken machining tool with a machining tool that can be used. Accordingly, machining in conventional machining devices are inefficient.

In machining in the machining device 300 according to this embodiment, if the machining tool is broken, the workpiece being machined at that time will be discarded. The machining operation, however, can be continued for workpiece(s) that is/are scheduled to be machined immediately after the discarded workpiece; therefore, it is possible to improve the efficiency of operation.

### [Operation of the machining device]

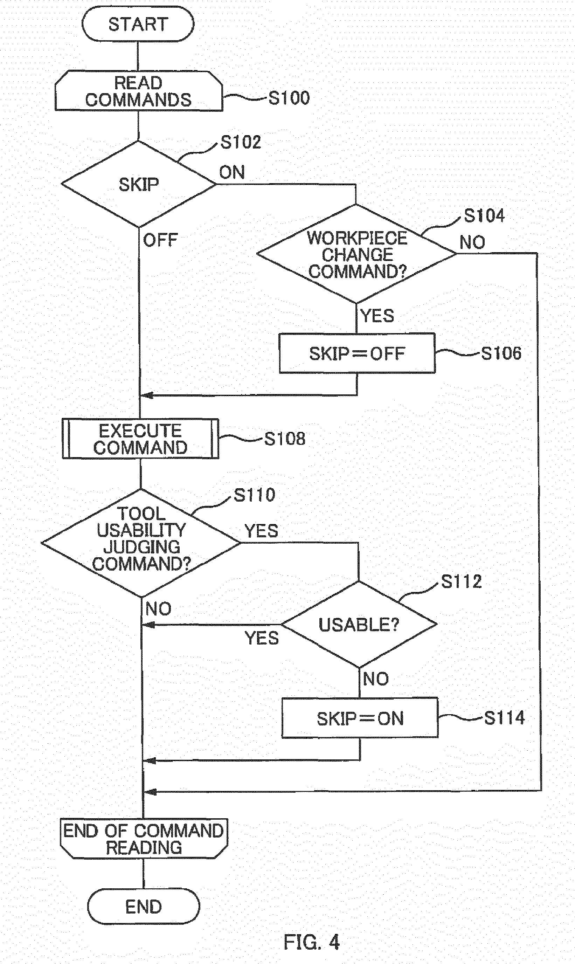

A typical operation of the machining device 300 according to this embodiment is described. Fig. 4 is a flow chart illustrating an operation of the machining device 300 according to this embodiment.

First, the control unit 322 reads the group of commands made up of a plurality of commands memorized in the memory unit 320 (S100). The control unit 322 executes, in order, or skips over the plurality of commands that have been read. Whether a command is to be executed or skipped is determined according to a parameter "SKIP" stored in the control unit 322. At an initial state, the parameter SKIP is OFF.

At S102, if the parameter SKIP is ON (S102: ON), the control unit 322 judges whether the command is a workpiece change command or not at S104. If the command is a workpiece change command (S104: Yes), the control unit 322 updates the parameter SKIP to OFF (S106). On the other hand, if the command is other than the workpiece change command (S104: No), the control unit 322 skips over the command.

If the parameter SKIP is OFF at S102 (S102: OFF) or if the parameter SKIP is updated to OFF at S106, the control unit 322 executes the command (S108).

After the execution of the command, if the command is not the tool usability judging command (S110: No), the operation proceeds to a next command. On the other hand, if the command is the tool usability judging command (S110: Yes), the subsequent processes differ depending on the result of the execution of the tool usability judging command. If the control unit 322 judges, by the execution of the tool usability judging command, that the machining tool T can be used (S112: Yes), the operation proceeds to a next command. On the other hand, if the control unit 322 judges that the machining tool T cannot be used (S112: No), the control unit 322 updates the parameter SKIP to ON (S114) and the operation proceeds to a next command. The aforementioned processing steps are executed in order for the plurality of commands included in the group of commands until the last command is executed.

The machining system 100 and the machining device 300 as well as the operation of the machining device 300 according to this embodiment have been described above. The machining device 300 according to this embodiment includes the milling mechanism 302 for carrying the machining tool T and being for milling the workpiece W; the detection mechanism 308 that detects the length of the machining tool T carried by the milling mechanism 302; the storage mechanism 312 that holds a plurality of machining tools T used by the milling mechanism 302; the workpiece changing mechanism 316 holding a plurality of workpieces W and being capable of changing the workpieces W to be milled by the milling mechanism 302; the memory unit 320 that memorizes a group of commands executed to form a predetermined modeled object to each of the plurality of workpieces W, the group of commands including the machining command(s) for forming the modeled object to the workpiece W, the tool usability judging command for judging usability of the machining tool T, and the workpiece change command(s) for changing the workpieces W; and the control unit 322 that controls the milling mechanism 302, the detection mechanism 308, the storage mechanism 312, and the workpiece changing mechanism 316 by executing the commands included in the group of commands, wherein: when the control unit 322 judges, as a result of the execution of the tool usability judging command, that the machining tool T in use cannot be used anymore because the length of the machining tool T in use is equal to or smaller than a predetermined value, the control unit 322 skips over one or more commands which have been scheduled to be executed before the workpiece change command to be executed for the first time after the tool usability judging command.

In machining in the machining device 300 according to this embodiment, even if the machining tool T is judged as being unusable in milling, the subsequent steps of the milling operation can be continued. For example, even if the machining tool T is broken during machining of the workpiece W1, the workpiece W2 that is to be machined after the workpiece W1 can be machined as expected. Therefore, machining can be continued and efficiency of operation is improved.

The machining device 300 according to this embodiment further includes the display control unit 324 that orders display of log information related to the control unit 322. This allows a user to easily check a progress of machining and a result thereof.

In the machining device 300 according to this embodiment, the log information includes at least one of information of the command(s) skipped by the control unit 322, information related to a workpiece W under being milled when the tool is judged as being unusable, and information representing a machining tool T judged as being unusable. With this, it is possible to determine positively at least one of a workpiece W that has not been processed yet, a time instant at which the machining is ceased for the workpiece W that has not been processed yet, and the machining tool T that cannot be used anymore.

### === Second embodiment ===

Next, an operation of the machining system 100 according to another embodiment is described, focusing on the difference from the first embodiment.

### [Exemplified machining operation]

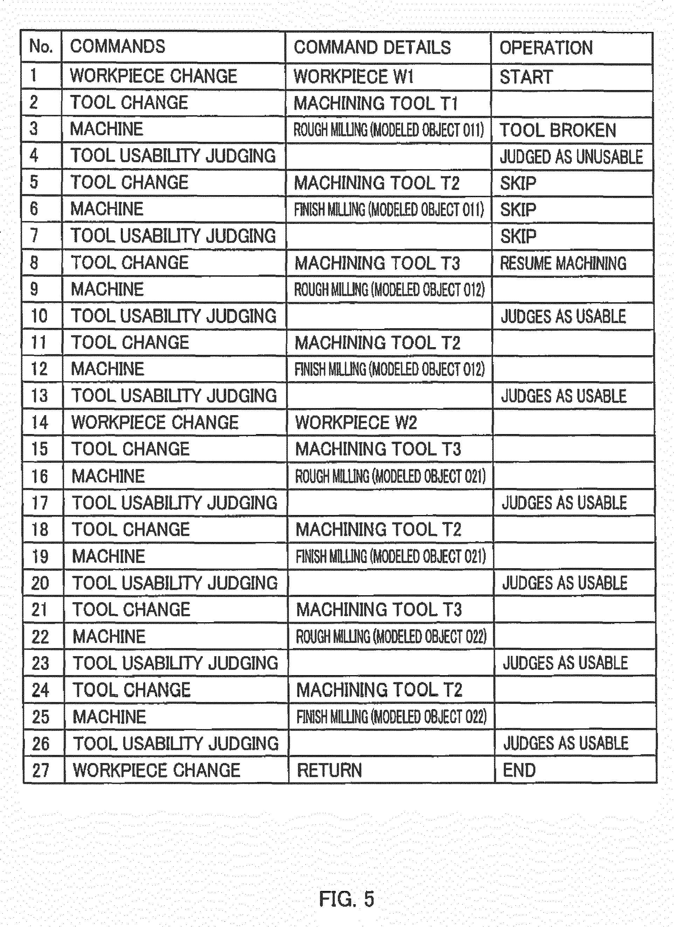

An exemplified machining operation achieved by the machining device 300 according to this embodiment is described. Fig. 5 shows an example of the group of commands by the machining device 300 according to this embodiment. A plurality of commands suitable for the machining data are set in the order to be executed. The machining operation by the machining device 300 of this embodiment is different from the first embodiment in the following points. In this example, two modeled objects, a modeled object O11 and a modeled object O12 are formed to the workpiece W1. The modeled objects O11 and O12 are formed in different areas of the workpiece W1. Likewise, two modeled objects, a modeled object O21 and a modeled object 022 are formed to the workpiece W2,

In Fig. 5, Nos. 1 to 13 correspond to commands for forming the modeled objects O11 and O12 to the workpiece W1. Nos. 14 to 26 correspond to commands for forming the modeled objects 021 and 022 to the workpiece W2.

No. 1 corresponds to a command for transferring the workpiece W1 and loading it onto the workpiece holder 306. Nos. 2 to 4 correspond to commands for rough milling of the modeled object O11. Nos. 5 to 7 correspond to commands for finish milling of the modeled object O11. Nos. 8 to 10 correspond to commands for rough milling of the modeled object 012. Nos. 11 to 13 correspond to commands for finish milling of the modeled object O12. No. 14 corresponds to a command for returning the workpiece W1 held by the workpiece holder 306 to the storage rack 318, transferring the workpiece W2 and loading it onto the workpiece holder 306. Nos. 15 to 17 correspond to commands for rough milling of the modeled object O21. Nos. 18 to 20 correspond to commands for finish milling of the modeled object 021. Nos. 21 to 23 correspond to commands for rough milling of the modeled object 022. Nos. 24 to 26 correspond to commands for finish milling of the modeled object O22. No. 27 corresponds to a command for returning the workpiece W2 held by the workpiece holder 306 to the storage rack 318.

After the workpiece change command indicated at No. 1 and the tool change command indicated at No. 2 are executed, the machining command indicated at No. 3 is executed. The machining command here is for rough milling using the machining tool T1. In this example, it is assumed that the machining tool T1 is broken during the execution of the machining command.

Next, the tool usability judging command indicated at No. 4 is executed. Since the machining tool T1 is broken during the execution of the immediately preceding machining command, the control unit 322 judges, as a result of the execution of the tool usability judging command, that the machining tool T1 is not usable according to the result obtained by the detection mechanism 308 detecting the length of the machining tool T1.

In this embodiment, when the control unit 322 judges, as a result of the execution of the tool usability judging command, that the machining tool in use cannot be used anymore because the length of the machining tool in use is equal to or smaller than a predetermined value, the control unit 322 controls to skip over one or more commands which have been scheduled to be executed after the tool usability judging command before the first command for a modeled object to be machined next. In this embodiment, as shown in Fig. 5, the commands indicated at Nos. 5 to 7 are skipped. In other words, the control unit 322 skips over the commands after the tool usability judging command indicated at No. 4 before the first command, the tool change command indicated at No. 8, for the modeled object 012 to be machined next. Since the commands indicated at Nos. 5 to 7 are skipped, the modeled object O11 in the workpiece W1 has not been processed yet.

Next, the tool change command indicated at No. 8 is executed. At this point of time, the control unit 322 controls the tool holder 304 and the driving mechanism 307 to direct the tool holder 304 to hold the machining tool for rough milling indicated at No. 9. It is, however, impossible to correctly machine the modeled object O12 if the machining tool T1 is continuously used because the machining tool T1 was broken at No. 3. Accordingly, at No. 9, the control unit 322 directs, as a result of the judgement at No. 4 that the machining tool T1 cannot be used anymore, the tool holder 304 to hold, in place of the machining tool T1, another machining tool, i.e., the machining tool T3, that is of the same kind as the machining tool T1.

Next, the control unit 322 executes, in order, from the machining command indicated at No. 9 to the tool usability judging command indicated at No. 13, thereby forming the modeled object O12 to the workpiece W1.

Next, the workpiece change command indicated at No. 14 is executed. At this point of time, the workpiece W1 with only the modeled object O12 formed is held by the workpiece holder 306 of the milling mechanism 302. The workpiece changing mechanism 316 returns the workpiece W1 from the workpiece holder 306 to a predetermined holding shelf 318a of the storage rack 318 and then picks up the workpiece W2 from the storage rack 318, transfers the workpiece W2, and loads it onto the workpiece holder 306.

Next, the control unit 322 executes, in order, from the tool change command indicated at No. 15 to the tool usability judging command indicated at No. 26, thereby forming the modeled objects 021 and 022 to the workpiece W2.

Finally, the workpiece change command indicated at No. 26 is executed. The control unit 322 controls the workpiece changing mechanism 316 to return the workpiece W2 from the workpiece holder 306 to a predetermined holding shelf 318a of the storage rack 318, and the machining is completed.

In machining in conventional machining devices, if the machining tool is broken, the modeled object being machined at that time will be discarded. Further, if the machining tool is broken, the machining operation is stopped and no subsequent machining can be continued. To resume machining, it is necessary for a user to manually replace the broken machining tool with a machining tool that can be used. Accordingly, machining in conventional machining devices are inefficient.

In machining in the machining device 300 according to this embodiment, if the machining tool is broken, the modeled object being machined at that time will be discarded. The machining operation, however, can be continued for modeled object(s) that is/are scheduled to be machined immediately after the discarded modeled object; therefore, it is possible to improve the efficiency of operation. Further, it is possible to reduce the number of discarded modeled objects formed to the same workpiece.

### [Operation of the machining device]

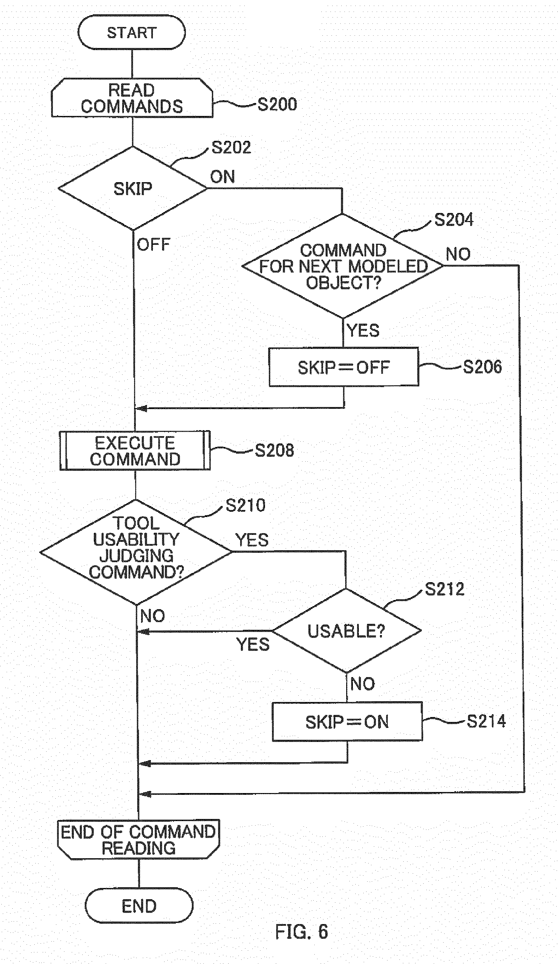

A typical operation of the machining device 300 according to this embodiment is described. Fig. 6 is a flow chart illustrating an operation of the machining device 300 according to this embodiment.

The operation of the machining device 300 according to this embodiment is different from that of the machining device 300 according to first embodiment in the step S104. That is, in this embodiment, if the parameter SKIP is updated to ON during machining of a certain modeled object, the control unit 322 judges whether the command is the first command for a modeled object to be machined next to the modeled object under being machined (S204). If the command is the first command for a modeled object to be machined next to the modeled object under being machined (S204: Yes), the control unit 322 updates the parameter SKIP to OFF. On the other hand, if the command is not the first command for a modeled object to be machined next to the modeled object under being machined (S204: No), the control unit 322 skips over that command.

The machining system and the machining device 300 as well as the operation of the machining device 300 according to this embodiment have been described above. The machining device 300 according to this embodiment includes the milling mechanism 302 for carrying the machining tool T and being for milling the workpiece W; the detection mechanism 308 that detects the length of the machining tool T carried by the milling mechanism 302; the storage mechanism 312 that holds a plurality of machining tools T used by the milling mechanism 302; the workpiece changing mechanism 316 holding a plurality of workpieces W and being capable of changing the workpieces W to be milled by the milling mechanism 302; the memory unit 320 that memorizes a group of commands executed to form, in order, a plurality of predetermined modeled objects to each of the plurality of workpieces W, the group of commands including the machining command(s) for forming any one of the plurality of modeled objects to the workpieces W, the tool usability judging command for judging usability of the machining tool T, and the tool change command(s) for changing the machining tools T; and the control unit 322 that controls the milling mechanism 302, the detection mechanism 308, the storage mechanism 312, and the workpiece changing mechanism 316 by executing the commands included in the group of commands, wherein: when the control unit 322 judges, as a result of the execution of the tool usability judging command, that the machining tool T in use cannot be used anymore because the length of the machining tool T in use is equal to or smaller than a predetermined value, the control unit 322 skips over one or more commands which have been scheduled to be executed after the tool usability judging command before the first command for a modeled object to be machined next.

In machining in the machining device 300 according to this embodiment, even if the machining tool T is judged as having been broken in milling, the subsequent steps of the milling operation can be continued. In other words, even if the machining tool T is broken during machining of a certain modeled object in a certain workpiece W, other modeled object(s) to be machined after the certain modeled object can be machined as scheduled. Therefore, it is possible to reduce the number of discarded modeled objects and in turn, the number of discarded workpieces W.

Although the embodiments of the present invention have been described above, these embodiments are given for the purpose of facilitating the understanding of the present invention and are not intended to limit the interpretation of the present invention. Further, the present invention can be changed and modified without departing from the spirit and scope thereof, and includes equivalents thereof.

## Claims

1. A machining device comprising:
a milling mechanism for carrying a machining tool and being for milling a workpiece;
a detection mechanism that detects a length of the machining tool carried by the milling mechanism;
a workpiece changing mechanism holding a plurality of workpieces and being capable of changing the workpieces to be milled by the milling mechanism;
a memory unit that memorizes a group of commands executed to form a predetermined modeled object to each of the plurality of workpieces, the group of commands including a machining command for forming the modeled object to the workpiece, a tool usability judging command for judging usability of the machining tool, and a workpiece change command for changing the workpieces; and
a control unit that controls the milling mechanism, the detection mechanism, and the workpiece changing mechanism by executing the commands included in the group of commands, wherein:
when the control unit judges, as a result of the execution of the tool usability judging command, that the machining tool in use cannot be used anymore because the length of the machining tool in use is equal to or smaller than a predetermined value, the control unit skips over one or more commands which have been scheduled to be executed before the workpiece change command to be executed for the first time after the tool usability judging command.

2. A machining device comprising:
a milling mechanism for carrying a machining tool and being for milling a workpiece;
a detection mechanism that detects a length of the machining tool carried by the milling mechanism;
a workpiece changing mechanism holding a plurality of workpieces and being capable of changing the workpieces to be milled by the milling mechanism;
a memory unit that memorizes a group of commands executed to form, in order, a plurality of predetermined modeled objects to each of the plurality of workpieces, the group of commands including a machining command for forming any one of the plurality of modeled objects to the workpieces, a tool usability judging command for judging usability of the machining tool, and a tool change command for changing the machining tools; and
a control unit that controls the milling mechanism, the detection mechanism, and the workpiece changing mechanism by executing the commands included in the group of commands, wherein:
when the control unit judges, as a result of the execution of the tool usability judging command, that the machining tool in use cannot be used anymore because the length of the machining tool in use is equal to or smaller than a predetermined value, the control unit skips over one or more commands which have been scheduled to be executed after the tool usability judging command before a first command for a modeled object to be machined next.

3. The machining device according to Claim 1 or 2, further comprising a display control unit that orders display of log information related to the control unit.

4. The machining device according to Claim 3, wherein the log information includes at least one of information of one or more commands skipped by the control unit, information representing a machining tool judged as being unusable, and information related to a workpiece under being milled when the tool is judged as being unusable.
